Europäisches Patentamt

European Patent Office

Office européen des brevets

(11) Veröffentlichungsnummer: **0 468 244 A2**

# EUROPÄISCHE PATENTANMELDUNG

(21) Anmeldenummer: **91111099.7**

(51) Int. Cl.⁵: **B08B 17/04**

(22) Anmeldetag: **04.07.91**

(30) Priorität: **27.07.90 DE 4023909**

(43) Veröffentlichungstag der Anmeldung:
**29.01.92 Patentblatt 92/05**

(84) Benannte Vertragsstaaten:
**CH DE DK FR GB LI SE**

(71) Anmelder: **RUDOLF WILD GmbH & Co.
INTERNATIONAL KG
Rudolf-Wild-Strasse 4-6
W-6904 Eppelheim-Heidelberg(DE)**

(72) Erfinder: **Stumpf, Friedrich
Schatthäuserstrasse 17
W-6922 Meckesheim(DE)**

(74) Vertreter: **Patentanwälte RUFF, BEIER und
SCHÖNDORF
Neckarstrasse 50
W-7000 Stuttgart 1(DE)**

(54) **Wiederverwendbarer Behälter aus Kunststoff sowie seine Herstellung und Verwendung.**

(57) Die Erfindung betrifft einen wiederverwendbaren Behälter aus Kunststoff, der mindestens an der inneren Oberfläche mit einem dünnen Kunststoffüberzug versehen ist, der durch den bestimmungsgemäßen Behälterinhalt nicht lösbar, aber in einem wäßrigen Waschmittel lösbar ist, wobei der Grundbehälter nicht gelöst wird.

EP 0 468 244 A2

Die Erfindung betrifft einen wiederverwendbaren Behälter aus Kunststoff sowie seine Herstellung und Verwendung.

Einwegbehälter aus Kunststoff verursachen erhebliche Probleme bei der Abfallbeseitigung, vor allem deshalb, weil sie einen großen Platzbedarf haben. Besonders dann, wenn gebrauchte Kunststoffbehälter in den Hausmüll gelangen, kann ein Recycling des Kunststoffs oder seine Beseitigung durch Verbrennung wegen der gleichzeitig vorliegenden Fremdverunreinigung problematisch sein.

Besonders in der Getränkeindustrie ist man bereits dazu übergegangen, Kunststoff-Flaschen nach Gebrauch wieder zurückzunehmen, zu reinigen und erneut zu befüllen. Hierbei erfordern die Flaschen je nach Art des Getränkes, mit dem sie zuvor befüllt waren, eine gesonderte Behandlung, insbesondere deshalb, weil Aromastoffe des Getränkes in den Kunststoff des Behälters eindiffundieren, so daß sie bei einem Waschvorgang nicht entfernt werden können. Bei anschließender Befüllung mit einer anderen Getränkeart, kann eine Geschmacksbeeinträchtigung des neuen Getränkes durch Rediffusion des Aromastoffes aus dem Kunststoff in das neue Getränk vorkommen. Auch erfordern die zu reinigenden Flaschen eine Vorkontrolle daraufhin, ob eine unbefugte Zwischenbenutzung erfolgt ist, aus der möglicherweise schädliche Rückstände zurückgeblieben sind, die die erneute Verwendung der Flasche ausschließen oder beeinträchtigen. Ähnliche Probleme können auch dann auftreten, wenn Behälter mit Feststoffen befüllt waren und einer Wiederverwendung zugeführt werden sollen.

Der Erfindung liegt die Aufgabe zugrunde, wiederverwendbare Kunststoffbehälter zu schaffen, bei denen die Beeinträchtigung durch die vorhergehende Verwendung zumindest vermindert, wenn nicht gar beseitigt ist.

Der erfindungsgemäße Behälter ist dadurch gekennzeichnet, daß er einen Grundbehälter aufweist, der die Form des Behälters besitzt, und mindestens die innere Oberfläche des Grundbehälters mit einem Kunststoffüberzug versehen ist, der durch den vorgesehenen Behälterinhalt nicht lösbar, aber in einem wäßrigen Waschmittel lösbar ist, wobei der Grundbehälter in dem Waschmittel unlösbar ist.

Der Grundbehälter kann von einem herkömmlichen bekannten Kunststoffbehälter gebildet sein. Der innere Kunststoffüberzug ist vorzugsweise sehr dünn im Verhältnis zur Wandstärke des Kunststoffbehälters. Dadurch wird der Rauminhalt des Kunststoffbehälters kaum merklich verringert, so daß die herkömmmlichen Formen und Werkzeuge ohne Veränderung für die Herstellung des Grundkörpers des erfindungsgemäßen Behälters verwendbar sind. Der innere Überzug bzw. die innere Auskleidung des Behälters dient zum Schutze des Grundbehälters, so daß dieser in einem für die Wiederverwendung geeigneten Zustand bleibt. Vorzugsweise ist die Innenseite des Grundbehälters vollständig und lückenlos mit dem auflösbaren Kunststoff ausgekleidet. Der Grundbehälter kann mit Vorteil auch an seiner Außenseite mit dem Kunststoffüberzug versehen sein. So kann der Grundkörper vollständig mit mindestens einer Schicht aus dem durch das Waschmittel lösbaren Kunststoff überzogen sein. Die Dicke des Kunststoffüberzuges liegt in der Regel um 0,2 bis 100 $\mu$m, bevorzugt um 5 bis 15 $\mu$m.

Die Schutzschicht aus dem auswaschbaren Kunststoff kann verschiedene Funktionen alternativ oder gemeinsam erfüllen. So kann sie als Aromasperre sowohl in Richtung vom Behälterinhalt zum Grundbehälter als auch in der Gegenrichtung dienen. Sie kann die Funktion eines Kratzschutzes für die Außenfläche des Behälters übernehmen, damit der Grundkörper und damit der Behälter auch nach vielfachem Gebrauch optisch gut aussieht. Der Kunststoff der Schutzschicht bzw. des Überzuges kann übliche Zusätze enthalten, zum Beispiel Stabilisatoren, Pigmente, Farbstoffe und dergleichen. So kann der Überzug auch als Lichtfilter gegen eine Beeinträchtigung des Behälterinhaltes und/oder des Grundbehälters durch Lichteinflüsse dienen. Farbstoffe können dazu dienen, um eine Beeinträchtigung, insbesondere Verletzung des Überzuges sichtbar zu machen. Die Farbstoffe können weiterhin Indikatorfarbstoffe sein, um mißbräuchliche Befüllung des Behälters durch Fremdstoffe an Hand einer Verfärbung oder Entfärbung kenntlich zu machen. Weiterhin können Pigmente verwendet werden, die die Diffundierbarkeit durch den Überzug herabsetzen. Insbesondere auf der Außenseite kann der Überzug zu Kennzeichnungszwecken oder zur Verschönerung auch bedruckt, bemalt oder eingefärbt sein. Weiterhin wird auch die Reinigung, so auch die Außenreinigung der Behälter erleichtert, da hartnäckig anhaftender Schmutz zusammen mit dem Überzug entfernt wird.

Die Art des für den Überzug verwendeten lösbaren Kunststoffs und die Schichtdicke des Überzuges richten sich vorzugsweise nach Art des vorgesehenen Behälterinhaltes und nach den besonderen Aufgaben der Schutzschicht. So können beispielsweise Härte des Überzugs, die Leichtlöslichkeit des Überzugs im verwendeten Waschmittel und andere Eigenschaften variiert werden. Vorzugsweise besteht der Überzug aus einem Kunststoff, der in wäßrig-neutralem bis saurem Medium unlösbar, aber in wäßrig-alkalischem Medium lösbar ist. Ein solcher Kunststoffüberzug ist besonders geeignet für Getränke, da diese normalerweise neutral bis sauer, jedoch nicht alkalisch sind. In entsprechender Weise ist der Behälter vorzugsweise eine Flasche für Flüssigkeiten, insbesondere eine Getränkeflasche. Wie bereits erwähnt, kann der Grundkörper aus herkömmlichen Kunststoffbehältern, insbesondere Kunststoff-Flaschen bestehen. Besonders geeignet sind Grundbehälter aus Polyethylenterephthalat (PET). Solche Grundbehälter in Flaschenform sind als sogenannte PET-Flaschen in der Getränkeindustrie gebräuchlich.

Der auflösbare Kunststoff des Überzuges ist vorzugsweise ein Carboxyl-Gruppen aufweisendes Copolymerisat oder Terpolymerisat aus Vinylcarbonsäuren und anderen Vinylmonomeren und kann, wie bereits erwähnt, übliche Zusatzstoffe enthalten. Der Kunststoff des Überzuges ist beispielsweise ein Copolymerisat aus Acrylsäure und/oder Methacrylsäure einerseits und Acrylat und/oder Methacrylat andererseits. Besonders bevorzugt sind Überzüge aus einem Copolymerisat aus Ethylacrylat und Methacrylsäure mit einem Mol-Verhältnis von 2:1 bis 6:1, insbesondere 2:1 bis 4:1. Durch Variation der Monomere und der Mol-Verhältnisse der Monomere sowie durch Variation der Verfahrensbedingungen können die mechanischen und chemischen Eigenschaften des im Waschmedium auflösbaren Kunststoffes gezielt eingestellt werden, wobei, wie oben erwähnt, auch durch die Zusätze die Eigenschaften variierbar sind. Derartige Carboxyl-Gruppen enthaltende Polymere können in lebensmittelrechtlich zulässiger Qualität hergestellt werden. Der Carboxylgruppengehalt der Polymere ist vorzugsweise so eingestellt, daß die Beschichtung bei Normaltemperatur mindestens bis ca. pH 9 in wäßrigem Medium unlöslich ist, bei ca. pH 10,5 (1 %ige Sodalösung) langsam löslich, bei ca. pH 11,5 (1 %ige Ammoniaklösung) gut löslich und bei ca. pH 13 (1 %ige NaOH-Lösung) schnell löslich ist. Die Auflösung erfolgt vorzugsweise bei erhöhter Temperatur.

Die Erfindung betrifft auch die Verwendung von in einem Waschmedium auflösbaren Kunststoffen zur Herstellung von Überzügen bei wiederverwendbaren Kunststoffbehältern durch wiederentfernbare Beschichtung mindestens der Innenseite der Behälter, insbesondere solchen Behältern, die zur Aufbewahrung von Lebensmitteln, vorzugsweise Getränken, dienen.

Die Erfindung betrifft auch die Verwendung der erfindungsgemäßen Behälter zum mehrmaligen Gebrauch, insbesondere durch Auflösen der lösbaren Schicht nach Gebrauch und Neubeschichtung vor erneuter Befüllung. Wird als Kunststoff ein in wäßrig-neutralem bis saurem Medium unlöslicher Kunststoff verwendet, der in wäßrig-alkalischem Medium lösbar ist, dann wird als Waschmittel bzw. Waschmedium vorzugsweise ein solches verwendet, das alkalisch bzw. basisch ist. Ist das Waschmittel mit dem lösbaren Kunststoff gesättigt oder ist es erschöpft, dann kann der gelöste Kunststoff durch Neutralisieren oder vorzugsweise durch Ansäuern ausgefällt und einer erneuten Verwendung zugeführt werden.

Die Erfindung betrifft auch ein Verfahren zur Herstellung der erfindungsgemäßen wiederverwendbaren Behälter. Dieses Verfahren ist dadurch gekennzeichnet, daß unbeschichtete Grundbehälter aus Kunststoff vor der Befüllung mit dem bestimmungsgemäßen Inhalt mindestens innen, mindestens einmal mit einer flächendeckenden Schicht aus einem in wäßrigem Medium wiederauflösbaren Kunststoff beschichtet werden, der andere Löslichkeitseigenschaften aufweist als der Kunststoff des Grundbehälters. Zur Beschichtung wird, wie oben bereits erwähnt, vorzugsweise ein im neutralen bis sauren wäßrigen Medium unlöslicher, aber im basischen wäßrigen Medium lösbarer Kunststoff verwendet. Mit besonderem Vorteil werden sämtliche freiliegenden Oberflächen des Grundbehälters beschichtet. Dadurch wird ein optimaler Schutz erreicht.

Die Beschichtung des Grundkörpers kann nach bekannten Beschichtungsverfahren erfolgen. Vorzugsweise erfolgt die Beschichtung durch Auftragen einer Lösung und/oder Dispersion des Kunststoffs. Als Lösungsmittel werden hierzu vorzugsweise lebensmittelrechtlich zugelassene Lösungsmittel verwendet, insbesondere solche, die den Kunststoff des Grundbehälters nicht lösen. Wasserlösliche Lösungsmittel, wie Alkohol, insbesondere Ethanol sind bevorzugt. Eine anschließende Trocknung wird mit Vorteil unter Wärmezufuhr durchgeführt, wobei eine Beheizung mit Infrarotstrahlen besonders geeignet ist. Die Trocknung kann durch Umwälzen von Luft oder vorzugsweise eines inerten Gases, wie Stickstoff oder Kohlendioxid, beschleunigt werden. Geeignete Trocknungstemperaturen, auf die der Überzug beim Trocknen aufgeheizt wird, liegen in der Regel bei bis zu 60 °C, bei geeigneten Materialien auch bis zu 80 °C.

Das Auftragen bzw. die Beschichtung kann durch Tauchen oder Spülen des Behälters erfolgen. Vorzugsweise wird die Beschichtung durch Aufsprühen der Lösung und/oder Dispersion vorgenommen. Ein Aufsprühen im Überschuß und Entfernen des Überschusses ist besonders vorteilhaft. Hierdurch wird die Bildung geschlossener Überzüge bevorzugt erreicht. Die Beschichtung kann einmal oder mehrmals wiederholt werden. Vorzugsweise wird nur eine einmalige Beschichtung vorgenommen. Die Viskosität der Lösung oder Dispersion kann so eingestellt werden, daß die gewünschte Schichtdicke bei einmaligem Auftrag erreicht wird.

Die Befüllung des Behälters mit dem bestimmungsgemäßen Inhalt wird vorzugsweise im wesentlichen unmittelbar im Anschluß an die Fertigstellung des Überzuges vorgenommen. So können Beschichtung des Grundbehälters und Trocknung des Überzuges in einem Verfahrensgang vor der Befüllung des Behälters, zum Beispiel mit Lebensmitteln, insbesondere Getränken, vorgenommen werden.

Die oben erwähnten Kunststoffe haben aufgrund ihrer freiliegenden Carboxylgruppen gute Haftungseigenschaften, so daß festhaftende Überzüge durch die Beschichtung erhalten werden. Ist eine Beschriftung oder Bedruckung der Außenseite des Behälters erwünscht, dann kann dies insbesondere durch Aufwalzen des Druck- oder Schriftbildes vorgenommen werden. Dieses Aufwalzen kann an der äußeren Oberfläche des Behälters als alleinige Druck-Beschichtung erfolgen oder zusätzlich zu einem Überzug, der durch eine gemeinsame Innen- und Außenbeschichtung gebildet wurde. Die für die Beschriftung bzw. Bedruckung vorgesehenen Farben sind mit Vorteil im gleichen Waschmedium wie der Überzug auflösbar.

Die Erfindung betrifft weiterhin ein Verfahren zur Wiederverwendung, insbesondere mindestens mehrmaligen Verwendung von Kunststoffbehältern, insbesondere Flaschen, bei denen ein Grundbehälter vor einer bestimmungsgemäßen Befüllung mit Gebrauchsinhalt an seiner inneren und ggf. äußeren Oberfläche mit einem wiederauflösbaren Kunststoff beschichtet wurde. Dieses Verfahren ist dadurch gekennzeichnet, daß die Beschichtung nach dem Gebrauch des Inhalts aufgelöst wird und der Grundbehälter vor der erneuten Befüllung mit einer neuen Kunststoffschicht versehen wird. Das Auswaschen von Resten des Gebrauchsinhalts und das Auflösen der Beschichtung können in einem Arbeitsgang mit demselben Waschmedium vorgenommen werden. Dadurch werden besondere Waschgänge zur Beseitigung des Überzuges vermieden. Da wäßrige Waschmedien häufig basisch sind, zeigt sich auch hier der Vorteil von Kunststoffüberzügen aus in wäßrig-neutralem bis saurem Medium unlöslichen, aber in basischem Medium lösbaren Kunststoffen. Durch pH-Verschiebung des Waschmediums in Richtung auf einen sauren pH-Wert läßt sich der verwendete Kunststoff aus dem Waschmedium ausfällen und kann so einer Wiederverwendung oder Entsorgung zugeführt werden.

Weitere Merkmale der Erfindung ergeben sich aus der nachfolgenden Beschreibung von bevorzugten Ausführungsformen der Erfindung in Verbindung mit der Zeichnung und den Unteransprüchen. Hierbei können die einzelnen Merkmale jeweils für sich allein oder zu mehreren Unterkombinationen miteinander bei einer Ausführungsform verwirklicht sein. In der Zeichnung zeigen:

Fig. 1      eine schematische Darstellung eines erfindungsgemäßen Behälters im Schnitt und

Fig. 2      eine schematische Darstellung des Wiederverwendungs-Kreislaufes des Behälters.

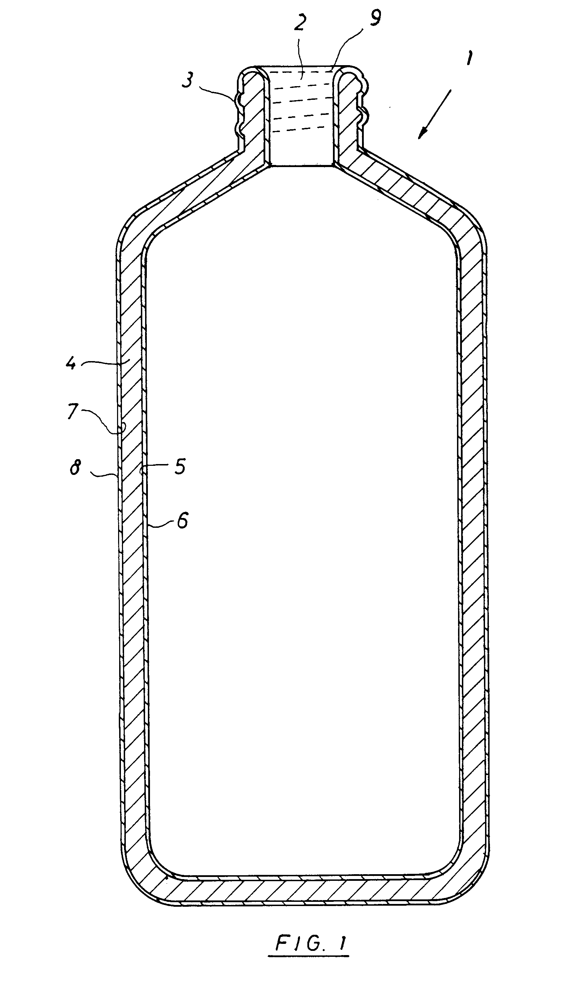

In Fig. 1 ist eine wiederverwendbare Kunststoff-Flasche 1 für Getränke dargestellt. Die Flasche 1 weist eine im wesentlichen zylindrische Form auf und besitzt einen kurzen Hals 2, der mit einem Schraubgewinde 3 versehen ist und mit einer nicht dargestellten Schraubkappe verschließbar ist. An Stelle des Schraubgewindes 2 und der Kappe kann auch ein üblicher Schnappverschluß vorgesehen sein. Die Kunststoff-Flasche weist eine mehrschichtige Verbundstruktur auf. Dabei ist ein Grundbehälter 4 an seiner inneren Oberfläche 5 mit einer Innenbeschichtung 6 und an seiner äußeren Oberfläche 7 mit einer Außenbeschichtung 8 versehen. Außenbeschichtung 8 und Innenbeschichtung 6 gehen am oberen Rand 9 des Flaschenhalses 2 ineinander über.

Der Grundbehälter 4 hat die Form und Größe von üblichen Kunststoff-Flaschen, wie sie für Getränke im Handel sind. Die Flasche ist eine sog. PET-Flasche aus Polyethylenterephthalat, wie sie beispielsweise durch Blasformen hergestellt ist. Die Wandstärke der PET-Flasche, d.h. des Grundbehälters 4, ist in der Zeichnung übertrieben dargestellt. In Wirklichkeit beträgt die Wandstärke bei einer Flasche mit einem Flascheninhalt von einem Liter ca. 0,6 mm.

Der die Innenbeschichtung 6 und die Außenbeschichtung 8 bildende Überzug besteht beispielsweise aus einem Copolymerisat aus Ethylacrylat und Methacrylsäure, das durch radikalische Polymerisation mit einem Mol-Verhältnis von 2,6:1 im Extruder polymerisiert ist, wie dies in der deutschen Offenlegungsschrift 34 35 468 beschrieben ist. Das Beschichten erfolgte durch gleichzeitiges Besprühen der Flasche innen und außen mit einer alkoholischen Lösung des Copolymerisats. Dabei wurde die Flasche mit ihrer Ausgußöffnung nach unten gehalten, um überschüssige Polymerisatlösung abtropfen zu lassen.

Anschließend erfolgt die Trocknung. Die Trockenmethode richtet sich nach dem Lösungsmittel, in welchem der Kunststoff auf eine bestimmte Viskosität gelöst worden ist. Vorzugsweise erfolgt die Trocknung mittels IR-Beheizung bei bis zu 60 °C. So erhält man einen gut haftenden, dünnen Überzug von ca. 5 bis 15 $\mu$m. Der Kunststoffüberzug ist hart aber elastisch. Die Bleistift-Ritzhärte beträgt für geeignete Beschichtungen aus Ethylacrylat und Methacrylsäure im Mol-Verhältnis 4:1 - Härte 3H, Ethylacrylat und Butylmethacrylat und Methacrylsäure im Mol-Verhältnis von 3:3:1 - Härte 2H, Butylmethacrylat und Acrylsäure im Mol-Verhältnis 2:1 - Härte 6H.

Er ist in wäßrigem Medium beständig bis etwa pH 9 und löst sich in stärker basischen Waschlösungen auf. Bei Raumtemperatur ist er in 1 %iger Sodalösung bei etwa pH 10,5 langsam löslich, in 1 %igem Ammoniak bei etwa pH 11,5 schnell löslich und in 1 %iger Natronlauge bei etwa pH 13 ebenfalls schnell löslich. Die Lösungsgeschwindigkeit erhöht sich mit steigender Temperatur.

Das Entfernen des Überzuges kann ohne besondere mechanische Hilfsmittel durch Besprühen der inneren und äußeren Oberflächen 5 und 7 der Flasche 1 mit einer wäßrigen Waschlösung vorgenommen werden, die durch Zusatz von Natriumhydroxid alkalisch gemacht ist.

Der Überzug verleiht der Flasche an seiner Außenseite Kratzfestigkeit und Glanz. Außerdem kann der äußere Überzug mit Farben bedruckt sein, wie sie in der deutschen Offenlegungsschrift 37 38 786 beschrieben sind, auf die hier Bezug genommen wird. Die äußere Beschichtung 8 verhindert auch, daß Schmutz an den Grundbehälter 4 gelangen kann.

Die innere Beschichtung 6 schützt den Grundbehälter 4 von innen. Es wird die Diffusion von insbesondere flüchtigen Stoffen, wie Gasen oder Aromastoffen, vom Getränk in den Grundbehälter oder vom Grundbehälter in das Getränk verhindert.

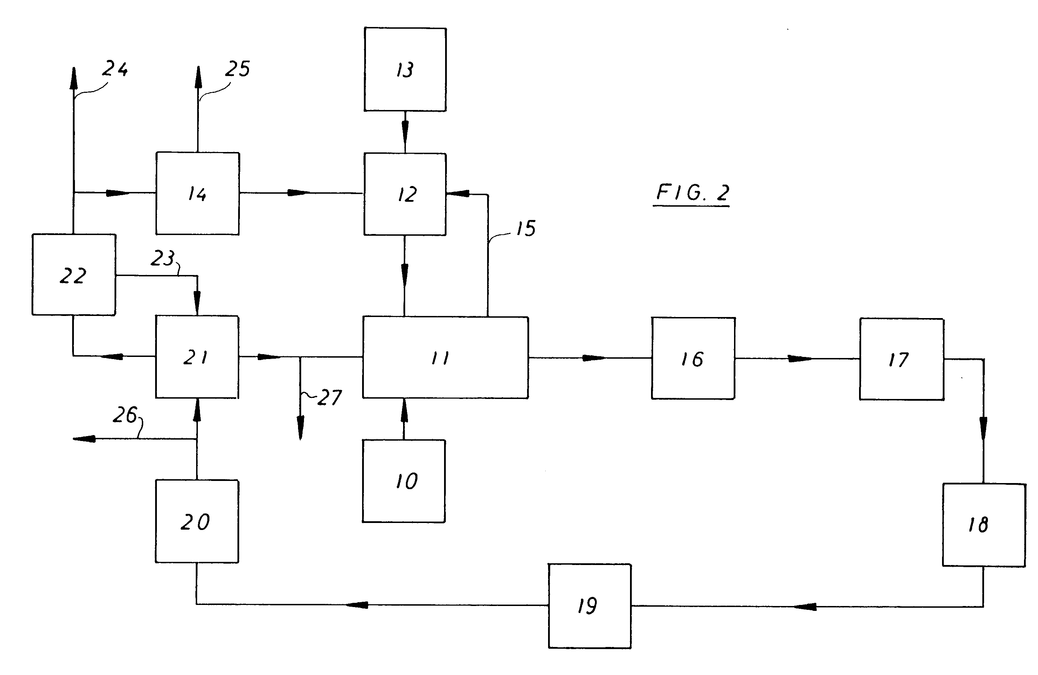

In Fig. 2 ist der Wiederverwendungs-Kreislauf für die erfindungsgemäßen Behälter schematisch dargestellt. Die Beschreibung des Kreislaufes erfolgt beispielhaft anhand der in Fig. 1 beschriebenen Getränkeflaschen. Es gilt jedoch sinngemäß dasselbe auch für andere Behälter.

Aus einem Lager 10 werden unbeschichtete Grundbehälter einer Beschichtungs- und Trocknungseinrichtung 11 zugeführt und dort innen und ggf. außen beschichtet, wonach die Beschichtung sofort durch IR-Beheizung getrocknet wird. Die Beschichtungslösung wird der Beschichtungseinrichtung 11 aus einem Tank 12 zugeführt. Dieser Tank wird entweder mit frischem Beschichtungskunststoff aus einem Vorratsbehälter 13 beschickt oder mit Recycling-Kunststoff, d.h. wiederaufgearbeitetem Beschichtungskunststoff, von einer Reinigungsanlage 14. In der Beschichtungs- und Trocknungseinrichtung wiedergewonnenes Lösungsmittel, im vorliegenden Fall Ethanol, wird dem Tank 12 über eine Rückführleitung 15 wieder zugeführt und dient zur Herstellung von Lösungen des Beschichtungskunststoffs.

Die beschichteten Flaschen aus der Beschichtungs- und Trocknungseinrichtung können, wenn erwünscht, in einer Bedruckungseinrichtung 16 beschriftet und ggf. mit Bildern bedruckt werden und gelangen dann in die Abfülleinrichtung 17. Von dort gelangen sie über die Auslieferung 18 zum Verbraucher 19. Nach Verbrauch des Inhalts, d.h. nachdem die Flasche geleert ist, wird sie vom Verbraucher bei der Rücknahme 20 des Auslieferers abgegeben, der das Leergut wieder zum Getränkeabfüller zurückbringt. In einer Waschanlage 21 werden die Flaschen gewaschen, wobei gleichzeitig die Innen- und Außenbeschichtung aufgelöst und damit entfernt werden. Die gereinigten Flaschen gelangen dann wieder zur Beschichtungs- und Trocknungseinrichtung, so daß der Nachschub aus dem Lager 10 nur noch bei Bedarf erfolgt.

Verbrauchtes Waschwasser der Wascheinrichtung 21 gelangt in eine Ausfällungsanlage 22, in der die alkalische Waschlösung, die den Beschichtungskunststoff gelöst enthält, angesäuert wird. Dabei fällt der Kunststoff aus und wird durch Filtration abgetrennt. Die Waschlösung kann über eine Rückführleitung 23 zur Waschanlage 21 zurückgeführt werden, nachdem sie vorher durch Zugabe von Natriumhydroxid wieder alkalisch gemacht ist. Der durch Ausfällung erhaltene Kunststoff kann über eine Leitung 24 abgesondert und, wenn gewünscht, einer andersartigen Wiederverwendung zugeführt werden oder beispielsweise durch Verbrennen entsorgt werden. In der Regel wird der Kunststoff jedoch in die Reinigungsanlage 14 geführt und dort wieder aufgearbeitet, so daß mindestens ein Teil des Kunststoffes in den Tank 12 für die Beschickungslösung zurückgeführt und wieder verwendet werden kann. In der Regel wird der Beschichtungskunststoff auch bei Wiederverwendung durch Zugabe von frischem Kunststoff aus dem Vorratsbehälter 13 aufgefrischt. Eine entsprechende Menge an gereinigtem Beschichtungskunststoff kann dann aus der Reinigungsanlage 14 durch Leitung 25 einer anderen Verwendung zugeführt werden.

Das dargestellte Schema zeigt, daß die Reinigung der Flaschen und die Auflösung der Beschichtung, die Wiederbeschichtung, ggf. die Bedruckung und die Abfüllung in einem kontinuierlichen Arbeitsgang durchführbar ist, ohne daß dadurch ein wesentlich größerer Zeitaufwand erforderlich ist. Durch weitgehendes Wiederverwenden des Beschichtungskunststoffes wird der Kunststoffbedarf gering gehalten. Dadurch, daß die Grundbehälter bzw. Grundflaschen durch die Beschichtung geschützt werden, wird der Ausschuß an Flaschen durch Abnutzung und Beschädigung wesentlich verringert, so daß der Gesamtverlust an Kunststoff trotz des Beschichtungsverfahrens verringert ist. Flaschen, die wegen mißbräuchlicher Benutzung oder altershalber ausgeschieden werden, können vor der Waschanlage 21 bei 26 oder nach Entfernen der Beschichtung, d.h. nach der Waschanlage 21 bei 27 abgesondert und einer Entsorgung bzw. Wiederverwendung des Kunststoffmaterials der Grundflasche zugeführt werden.

**Patentansprüche**

**1.** Wiederverwendbarer Behälter (1) aus Kunststoff, dadurch gekennzeichnet, daß er einen Grundbehälter (4) aufweist, der die Form des Behälters (1) besitzt, und mindestens die innere Oberfläche (5) des Grundbehälters (4) vollflächig mit einem Kunststoffüberzug (6) versehen ist, der durch den bestimmungsgemäßen Behälterinhalt nicht lösbar, aber in einem wäßrigen Waschmittel lösbar ist, wobei der Grundbehälter (4) in dem Waschmittel unlösbar ist.

2. Behälter nach Anspruch 1, dadurch gekennzeichnet, daß die Schichtdicke des lösbaren Kunststoffüberzuges (6, 8) 0,2 bis 100 $\mu$m, insbesondere 5 bis 10 $\mu$m beträgt.

3. Behälter nach Anspruch 1 oder 2, dadurch gekennzeichnet, daß der Überzug (6, 8) aus dem durch das Waschmittel lösbaren Kunststoff den Grundbehälter (4) innen und außen lückenlos überdeckt.

4. Behälter nach einem der vorhergehenden Ansprüche, dadurch gekennzeichnet, daß der Überzug (6, 8) aus einem in neutralem bis saurem wäßrigem Medium unlösbaren, aber in alkalisch-wäßrigem Medium lösbaren Kunststoff besteht.

5. Behälter nach einem der vorhergehenden Ansprüche, dadurch gekennzeichnet, daß er ein Behälter für Flüssigkeiten, insbesondere eine Flasche (1) ist.

6. Behälter nach einem der vorhergehenden Ansprüche, dadurch gekennzeichnet, daß er mit einer Flüssigkeit, insbesondere einem Getränk, gefüllt ist, die vorzugsweise einen neutralen bis schwach-sauren pH-Wert besitzt.

7. Behälter nach einem der vorhergehenden Ansprüche, dadurch gekennzeichnet, daß der Grundbehälter (4) aus Polyethylenterephthalat (PET) besteht.

8. Behälter nach einem der vorhergehenden Ansprüche, dadurch gekennzeichnet, daß der lösbare Kunststoff ein COOH-Gruppen aufweisendes Copolymerisat oder Terpolymerisat aus Vinyl-Carbonsäuren und anderen Vinylmonomeren ist, das ggf. übliche Zusatzstoffe enthält.

9. Behälter nach einem der vorhergehenden Ansprüche, dadurch gekennzeichnet, daß der lösbare Kunststoff ein solcher auf Basis von (Meth)-Acrylsäurecopolymerisaten oder Terpolymerisaten ist.

10. Verwendung des Behälters nach einem der vorhergehenden Ansprüche zum mehrmaligen Gebrauch, insbesondere durch Auflösen der lösbaren Schicht nach Gebrauch und Neubeschichtung vor erneuter Befüllung.

11. Verwendung von in wäßrigem Waschmedium auflösbaren Kunststoffen zur wiederentfernbaren Beschichtung mindestens der Innenseite von Behältern, insbesondere solchen Behältern, die zur Aufbewahrung von Lebensmitteln, vorzugsweise Getränken, dienen.

12. Verfahren zur Herstellung von beschichteten Behältern nach einem der Ansprüche 1 bis 9, dadurch gekennzeichnet, daß unbeschichtete Grundbehälter aus Kunststoff vor der Befüllung mit dem bestimmungsgemäßen Inhalt mindestens innen, mindestens einmal mit einer flächendeckenden Schicht aus einem in wäßrigem Medium wiederauflösbaren Kunststoff beschichtet werden, der andere Löslichkeitseigenschaften aufweist als der Kunststoff des Grundbehälters.

13. Verfahren nach Anspruch 12, dadurch gekennzeichnet, daß zur Beschichtung ein im neutralen bis sauren wäßrigen Medium unlöslicher, aber in basischem wäßrigem Medium lösbarer Kunststoff verwendet wird.

14. Verfahren nach Anspruch 12 oder 13, dadurch gekennzeichnet, daß sämtliche freiliegenden Oberflächen des Grundbehälters beschichtet werden.

15. Verfahren nach einem der Ansprüche 12 bis 14, dadurch gekennzeichnet, daß der Kunststoff in Form einer Lösung und/oder Dispersion aufgebracht wird.

16. Verfahren nach einem der Ansprüche 12 bis 15, dadurch gekennzeichnet, daß als Lösungsmittel für den Kunststoff beim Aufbringen ein insbesondere wasserlösliches Lösungsmittel verwendet wird, das kein Lösungsmittel für den Kunststoff des Grundbehälters ist.

17. Verfahren nach einem der Ansprüche 12 bis 16, dadurch gekennzeichnet, daß die Beschichtung durch Aufsprühen erfolgt, insbesondere durch Aufsprühen im Überschuß und Entfernen des Überschusses.

18. Verfahren nach einem der Ansprüche 15 bis 17, dadurch gekennzeichnet, daß die aufgebrachte Beschichtung durch Wärmezufuhr getrocknet wird, wobei die Trocknung vorzugsweise bei Temperaturen im Bereich von 60 bis 80 °C vorgenommen wird.

19. Verfahren nach einem der Ansprüche 15 bis 18, dadurch gekennzeichnet, daß die Viskosität der Lösung und/oder Dispersion so eingestellt wird, daß die gewünschte Schichtdicke bei einmaligem Auftrag erreicht wird.

20. Verfahren nach einem der Ansprüche 12 bis 19, dadurch gekennzeichnet, daß die Befüllung des Behälters im wesentlichen unmittelbar im Anschluß an die Beschichtung und ggf. Trocknung vorgenommen wird.

21. Verfahren zur Wiederverwendung, insbesondere mehrmaligen Verwendung von Kunststoffbehältern, dadurch gekennzeichnet, daß ein Grundbehälter, der vor seiner bestimmungsgemäßen Befüllung mit Gebrauchinhalt an seiner inneren und ggf. äußeren Oberfläche mit einem wiederauflösbaren Kunststoff beschichtet wurde, insbesondere ein Behälter nach einem der Ansprüche 1 bis 9, unter Auflösen der Beschichtung gewaschen wird und der Grundbehälter vor der erneuten Befüllung mit einer neuen Kunststoffschicht versehen wird.

22. Verfahren nach Anspruch 21, dadurch gekennzeichnet, daß das Auflösen der Beschichtung in einem Arbeitsgang mit dem Auswaschen von Resten des Gebrauchsinhalts unter Verwendung desselben Waschmediums vorgenommen wird.

23. Verfahren nach Anspruch 21 oder 22, dadurch gekennzeichnet, daß für die Beschichtung ein in wäßrig-neutralem bis saurem Medium unlöslicher, aber in basischem wäßrigem Medium lösbarer Kunststoff verwendet wird und der Kunststoff nach Auflösen in basischem Medium durch Ansäuern des wäßrigen Waschmediums ausgefällt und wiedergewonnen wird.

F I G. 1

FIG. 2